# EUROPÄISCHE PATENTSCHRIFT

(11) **EP 0 795 865 B1**
(45) Veröffentlichungstag und Bekanntmachung des Hinweises auf die Patenterteilung: **18.09.2002**
(21) Anmeldenummer: 96119588.0
(22) Anmeldetag: 06.12.1996
(51) Int. Cl.: G11B 23/023

(54) **Kassettenhalterung**
Cassette holding device
Dispositif de support de cassette

(30) Priorität: 14.03.1996 DE 19609998
(43) Veröffentlichungstag der Anmeldung: 17.09.1997
(73) Patentinhaber: fischerwerke Artur Fischer GmbH & Co. KG, 72178 Waldachtal (DE)
(72) Erfinder: Bieck, Torsten, Dipl.-Ing., 72178 Waldachtal (DE)

(56) Entgegenhaltungen:
- EP-A- 0 654 788
- DE-A- 4 219 232
- DE-A- 4 324 265
- US-A- 5 303 993
- US-A- 5 363 960
- US-A- 5 381 897

## Beschreibung

Die vorliegende Erfindung betrifft eine Kassettenhalterung zur Queraufbewahrung von Magnetbandkassetten oder ähnlichen Tonträgern gemäß dem Oberbegriff des Hauptanspruchs.

In der DE 42 19 232 A1 ist eine derartige Kassettenhalterung beschrieben. Diese bekannte Kassettenhalterung umfaßt ein Gehäuse mit einem Schieber, der gegen eine Federkraft in das Gehäuse einschiebbar und in der eingeschobenen Position verriegelbar ist. Der Schieber nimmt die quer aufzubewahrende Kassette auf, die in der Entnahmeposition des Schiebers bequem entnommen oder ausgetauscht werden kann. In der Entnahmeposition steht der Schieber deutlich aus dem Gehäuse heraus. In der Aufbewahrungsposition läßt sich der Schieber im Gehäuse verriegeln und entriegeln.

Derartige Kassettenhalterungen werden zur Aufbewahrung der handelsüblichen Kompaktkassetten (MCC), deren Bandwickelkerne frei zugänglich sind, und auch Digitalkassetten (DCC), die vollständig geschlossene Breitseiten besitzen, verwendet. Damit bei den Kompaktkassetten die Wickelkerne und auch das aufgewickelte Bandmaterial bei Erschütterungen keine unkontrollierten Bewegungen ausführen, weist die bekannte Kassettenhalterung Sperrorgane für die Wickelkerne auf, die beim Auflegen einer Kompaktkassette in die Wickelkerne eingreifen und diese gegen Verdrehen sichern. Da dies bei den geschlossenen Breitseiten der Digitalkassetten nicht möglich und auch nicht erforderlich ist, ist die bekannte Kassettenhalterung derart ausgestaltet, daß das Sperrorgan nur beim Einlegen der Kompaktkassetten betätigt wird. Dies wird durch die bei den genormten Kompaktkassetten vorhandene Gehäuseverdickung in dem Bereich, wo die Wiedergabe- und Aufnahmeköpfe eines Tonbandgerätes mit dem Magnetband zur Anlage kommen, gesteuert. Bei der bekannten Kassettenhalterung werden die gegen eine Federkraft in Sperrposition verschwenkbaren Sperrorgane über Betätigungsinstrumente beim Einlegen einer Kompaktkassette betätigt. Betätigungselemente befinden sich zu diesem Zweck in einer Vertiefung, in die die Kompaktkassette mit einer der beiden an deren Breitseiten ausgebildeten Erhebung eingreift. Beim Einlegen einer Digitalkassette, die keine derartige Erhebung besitzt, werden die Betätigungselemente nicht betätigt, so daß die Sperrorgane nicht aus der Auflageebene herausgeschwenkt werden. Für jeden Bankwickelkern ist ein Sperrorgan vorgesehen, das jeweils gegen die Kraft eines zugeordneten Federelements in die Sperrposition verschwenkbar ist.

Aus der DE 43 24 265 A1 ist ein Kassettenhalterung für in Längsrichtung einschiebbare Magnetbandkassetten bekannt, die ebenfalls in die Bandwickelkerne der Magnetbandkassetten eingreifende und in Einschubrichtung fluchtende Sperrorgane und eine Bodenplatte aufweist, auf der ein verriegelbarer und mit einer Feder die Magnetbandkassetten aus einer Aufbewahrungsposition in eine Entnahmeposition ausfahrbarer Schieber gelagert ist. Dabei ist in der Bodenplatte ein von der Magnetbandkassette quer zur Einschubrichtung verschiebbares Schiebeelement mit seitlichen Steuerkeilen sowie Schwenkelementen gelagert, mit denen die Sperrorgane in die Spulennaben verschwenkbar sind. Die Sperrorgane sind an einem quer verschiebbaren Schiebeelement angebracht, wodurch es möglich ist, daß die Sperrorgane exakt auf die Position der zugehörigen Spulennabe ausgerichtet wird. Die Ausrichtung erfolgt hier ebenfalls durch die an den genormten Magnetbandkassetten beidseitig ausgebildete Gehäuseverdickung, die je nach Ausrichtung der Magnetbandkassette an linksseitige oder rechtsseitige Steuerkeile des Schiebeelements drückt und dieses zusammen mit den daran angebrachten Arretiereinrichtungen in die erforderliche Position verschiebt. Am längsverschiebbaren Schieber bewirken Steuerkanten, daß die Sperrorgane bei eingeschobenem Schieber in die Sperrposition verschwenkt werden. Als Betätigungselement für die Sperrorgane sind Wellen vorgesehen an deren beiden Enden Schwenkzapfen radial abstehen. Die Schwenkzapfen verändern somit ihre seitliche Position entsprechend der Positionierung des querverschiebbaren Schiebeelements. Ist das Schiebeelement in einer Mittenposition, so sind die Schwenkzapfen der Sperrorgane wirkungslos.

Aufgrund eines immer geringer werdenden Platzangebots in den Kraftfahrzeugen müssen die Kassettenhalterungen unter Berücksichtigung einer minimalen Materialstärke eine möglichst geringe Bauhöhe aufweisen.

Ausgehend von diesem bekannten Stand der Technik liegt der vorliegenden Erfindung daher die Aufgabe zugrunde, eine Kassettenhalterung zur Queraufbewahrung von Magnetbandkassetten oder ähnlichen Tonträgern vorzuschlagen, die mit möglichst wenig verschiedenen Bauteilen auskommt und dabei mit einer geringeren Bauhöhe als bei den bekannten Kassettenhalterungen auskommt.

Diese Aufgabe wird erfindungsgemäß durch eine Kassettenhalterung mit den Merkmalen des Hauptanspruchs gelöst. Die in eine Sperrposition verschwenkbaren Sperrorgane sind jeweils in einer Ausnehmung im Schieber angeordnet und an einer gemeinsamen am Schieber gelagerten Welle angebracht.

Bei der Bewegung des Schiebers aus der Entnahmeposition in die Aufbewahrungsposition wird über eine durch eine Öffnung in der Schieberbodenfläche hindurchragende Steuerkante eine auf der Bodenplatte angeordnete Betätigungseinrichtung quer zur Bewegungsrichtung des Schiebers bewegt, so daß über einen von der Welle abstehenden ersten Schwenkzapfen die Sperrorgane in die Bandwickelkerne eingreifen, wenn der Schieber die Aufbewahrungsposition erreicht hat. Die Steuerkante der Betätigungseinrichtung ist in einer Vertiefung der Tonträgerauflagefläche des Schiebers angeordnet. Infolgedessen wird die Steuerkante nur beim Einlegen einer Kompaktkassette betätigt, während beim Einlegen einer Digitalkassette die Sperrorgane nicht betätigt werden. Über den ersten Schwenkzapfen werden die Sperrorgane in der Aufbewahrungsposition verriegelt.

Um noch weiter die Bauhöhe zu reduzieren, weist die Betätigungseinrichtung vorteilhafterweise einen Steuerkeil auf, der ebenso wie der Schwenkzapfen in einer gemeinsamen Ausnehmung in der Bodenplatte angeordnet ist und sich darin bewegt. Bei der Bewegung des ersten Schwenkzapfens in die Aufbewahrungsposition stößt der Schwenkzapfen an den sich in der gleichen Ausnehmung in den Weg des Schwenkzapfens bewegten Steuerkeil und wird durch ihn gedreht.

Gemäß einer Weiterbildung der Erfindung weist die Ausnehmung im Schieber eine Steuerkante auf, die bei der Bewegung des Schiebers aus der Aufbewahrungsposition in die Entnahmeposition die Betätigungseinrichtung wieder in die Ausgangsposition zurückbewegt und dadurch die Sperrorgane entriegelt. Damit wird durch einfache konstruktive Maßnahmen ohne die Verwendung zusätzlicher Bauteile die Rückstellung der Betätigungseinrichtung gewährleistet. Um zu erreichen, daß nach der Entriegelung auch die Sperrorgane wieder in ihre Urstellung gelangen können, weist die Welle vorzugsweise mindestens einen zweiten von der Welle abstehenden Schwenkzapfen auf, der gemäß einer vorteilhaften Weiterbildung in der Aufbewahrungsposition in eine in der Bodenplatte angeordnete Ausnehmung ragt. Gemäß einer weiteren Ausbildung wird der zweite Schwenkzapfen bei Bewegung des Schiebers aus der Aufbewahrungsposition in die Entnahmeposition durch eine Zwischenkante in der Ausnehmung, die einen tieferen Bereich der Ausnehmung von einem flacheren trennt, in seine Urstellung geschwenkt und dadurch die Sperrorgane aus den Bandwickelkernen bewegt. Diese Ausgestaltung dient ebenfalls der optimalen Ausnutzung der zur Verfügung stehenden Bauhöhe.

Eine weitere Maßnahme zur Bauhöhenreduzierung stellt gemäß einer weiteren Ausbildung die Anordnung der Steuerorgane in Ausnehmung dar, in der sie sich bei der Bewegung des Schiebers bewegen.

Bei der gesamten erfindungsgemäß ausgestalteten Kassettenhalterung wird durch die Verwendung von möglichst wenigen einzelnen Bauteilen für die Bewegung der Sperrorgane unter Ausnutzung aller gestalterischen Möglichkeiten die Bauhöhe so gering wie nur möglich gehalten. Entscheidend ist nunmehr noch die minimale Wandstärke des Kunststoffmaterials, die erforderlich ist, um die gewünschte Stabilität und Haltbarkeit zu gewährleisten.

Die Erfindung wird nachfolgend anhand eines in den Zeichnungen dargestellten Ausführungsbeispiels näher erläutert.

Es zeigen:
- Figur 1: eine Draufsicht auf die Bodenplatte der Kassettenhalterung in der Entnahmeposition ohne Kassette, Schieber und für die Bewegung des Schiebers erforderlichen Einzelteilen;
- Figur 2: die Kassettenhalterung in verschiedenen Ansichten und Schnitten in der Entnahmeposition ohne Kassette;
- Figur 3: die Kassettenhalterung in verschiedenen Ansichten und Schnitten in der Aufbewahrungsposition, jedoch ohne Magnetbandkassette;
- Figur 4: eine Darstellung gemäß Figur 3 mit Magnetbandkassette; und
- Figur 5: die Kassettenhalterung in der Aufbewahrungsposition in verschiedenen Ansichten und Schnitten; jedoch ohne Digitalkassette.

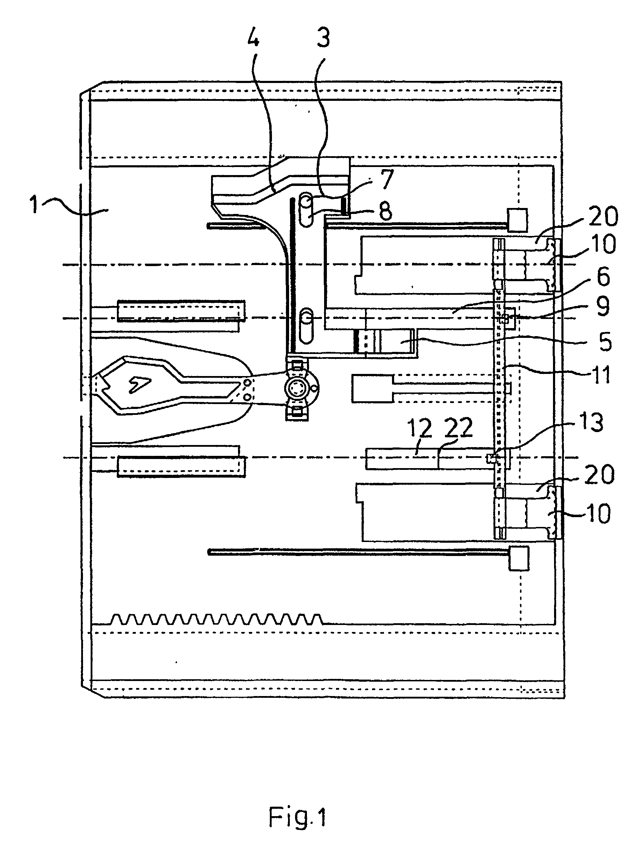

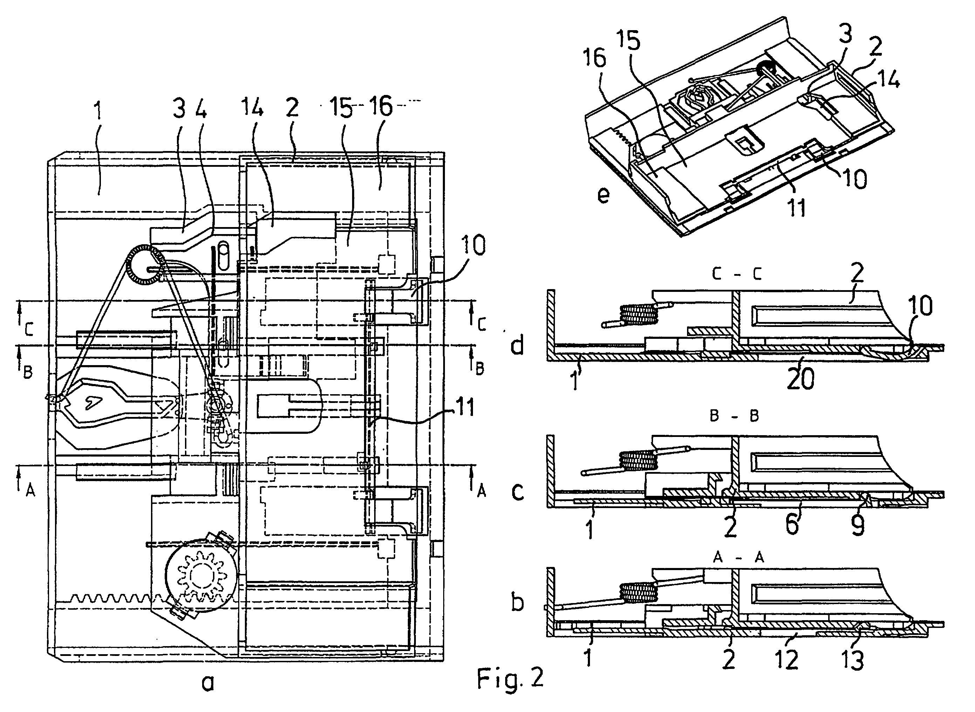

Bei der in Figur 1 dargestellten Draufsicht auf die Bodenplatte 1 einer Kassettenhalterung wurden die in den nachfolgenden Figuren 2 bis 5 noch dargestellten Einzelteile, die den Schieber 2 (Figur 2 bis Figur 5) aus der Aufbewahrungsposition in die Entnahmeposition bewegen und in der Aufbewahrungsposition verriegeln, nicht dargestellt. Die in den Figuren dargestellten Verriegelungseinrichtungen werden nachfolgend nicht näher erläutert, da diese allgemein bekannt und nicht Gegenstand der vorliegenden Erfindung sind.

Figur 1 zeigt auf der Bodenplatte 1 eine in Querrichtung verschiebbare Betätigungseinrichtung 3 mit einer senkrecht nach oben vorstehenden Steuerkante 4 und einen Steuerkeil 5, der bei einer Verschiebung der Betätigungseinrichtung 3 in den Bereich der in der Bodenplatte vorgesehenen Ausnehmung 6 gelangt. Die Zapfen 7 in den Langlöchern 8 begrenzen die Querbewegung der Betätigungseinrichtung. Die Ausnehmung 6 dient als Freiraum für einen Schwenkzapfen 9, der an der die Sperrorgane 10 tragenden Welle 11 angeordnet ist. Bei der Bewegung der Welle 11, die an dem nicht dargestellten Schieber 2 befestigt ist, kann der Schwenkzapfen 9 mit dem Steuerkeil 5, der ebenfalls in der Ausnehmung 6 angeordnet ist, in Eingriff gelangen, wenn sich dieser in einer Linie mit dem Schwenkzapfen 9 befindet. Dadurch werden die Sperrorgane 10 in die gewünschte Richtung bewegt. Eine zweite Ausnehmung 12 dient der Rückstellung der Sperrorgane 10 durch einen zweiten Schwenkzapfen 13.

Die Figuren 2 bis 5 zeigen in den Ansichten a die Draufsicht auf die Kassettenhalterung, wobei durch gestrichelte Linien auch die nicht sichtbaren Teile angedeutet sind. In den Ansichten b, c und d sind die jeweiligen in der Ansicht a angedeuteten Schnitte dargestellt. Die Ansicht e zeigt die Kassettenhalterung in perspektivischer Ansicht.

In Figur 2 ist die Kassettenhalterung mit dem Schieber 2 in der Entnahmeposition dargestellt. Die Sperrorgane 10, die über die Welle 11 an dem Schieber 2 befestigt sind, befinden sich in der niedergelegten, d. h. funktionslosen Stellung und die Betätigungseinrichtung 3 ist in der entriegelten Stellung. Die Öffnung 14 in dem Schieber 2 ist nicht in dem Bereich der Steuerkante 4 der Betätigungseinrichtung 3. Wie aus der Figur 2e ersichtlich, befindet sich der wesentliche Teil der Öffnung 14 in dem tieferliegenden Bereich 15 der Auflagefläche für die Kassette. Durch die beidseitigen höherliegenden Bereiche 16 wird bei den genormten Kassetten erreicht, daß die Digitalkassette, die keinen verdickten Gehäusebereich aufweist, nur auf dem höherliegenden Bereich 16 aufliegt, während die Magnetbandkassette sowohl auf dem tieferliegenden Bereich 15 als auch auf dem höherliegenden Bereich 16 aufliegt und durch die Gehäuseverdickung bei der Bewegung des Schiebers 2 mit der Steuerkante 4 der Betätigungseinrichtung 3 in Eingriff gelangen kann.

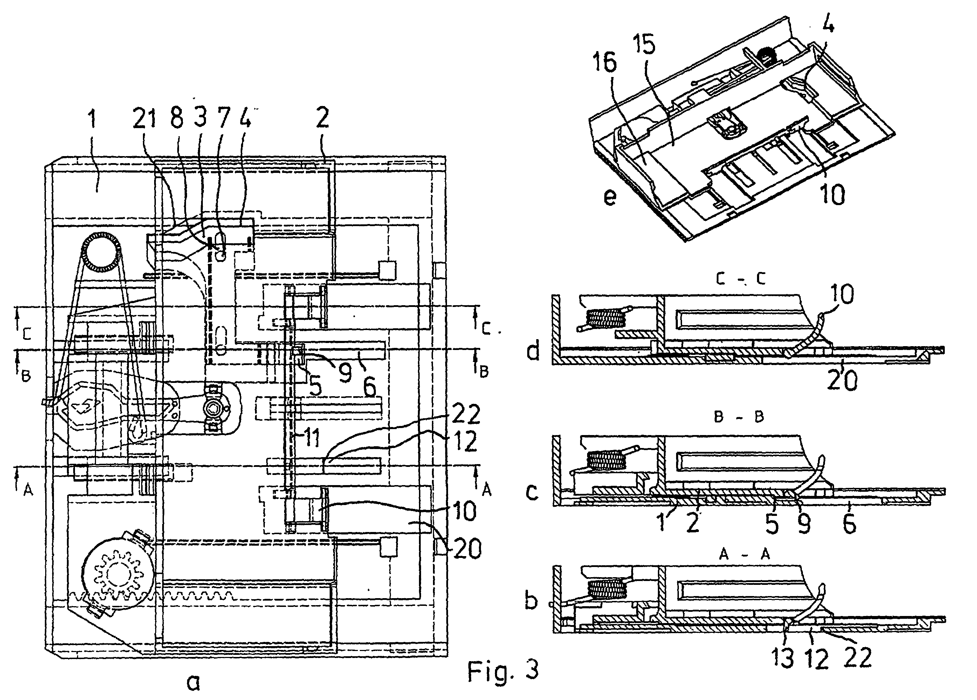

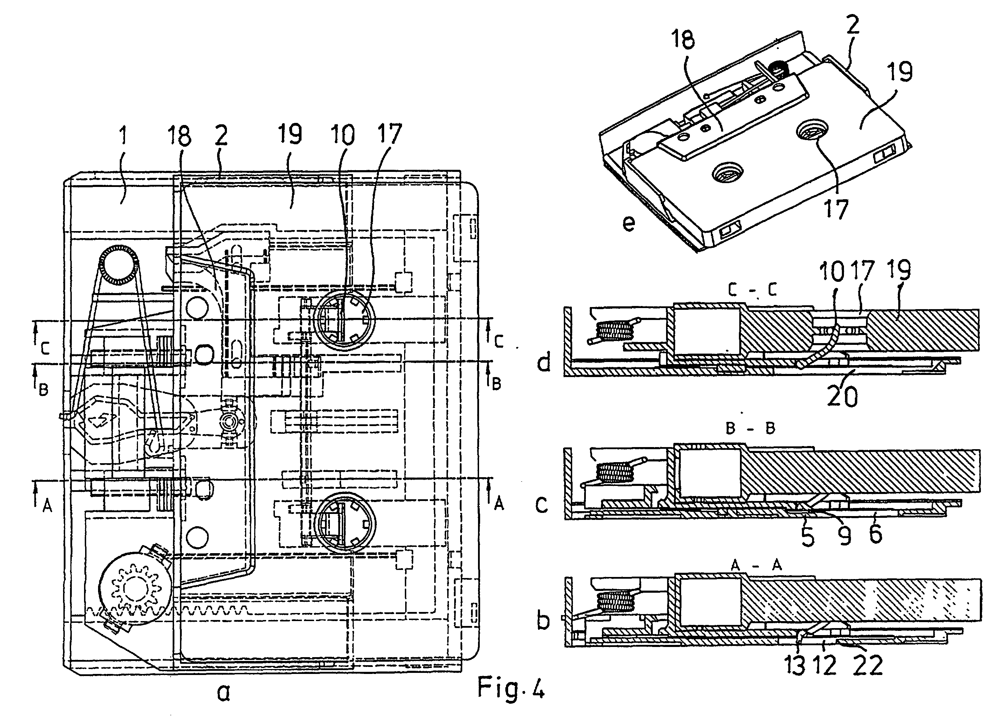

Dies zeigt Figur 3, wobei hier zur besseren Verdeutlichung die Magnetbandkassette nicht dargestellt ist. Figur 4 zeigt ebenfalls den Schieber in der Aufbewahrungsposition jedoch mit einer Magnetbandkassette 19, wobei der Eingriff der Sperrorgane 10 in die Bandwickelkerne 17 ersichtlich ist. Außerdem ist die Gehäuseverdickung 18 an der Magnetbandkassette 19 gezeigt. Durch die Bewegung des Schiebers 2 wird die an dem Schieber 2 drehbar gelagerte Welle 11 mit den Sperrorganen 10 und dem Schwenkzapfen 9 mitbewegt. Die Bewegung der Sperrorgane erfolgt in der Ausnehmung 20 und die Bewegung des Schwenkzapfens 9 in der Ausnehmung 6 in der Bodenplatte 1. Durch die Gehäuseverdickung 18 in dem tieferliegenden Bereich 15 drückt diese gegen die Steuerkante 4 der Betätigungseinrichtung 3 und bewegt die Betätigungseinrichtung 3 quer zur Bewegungsrichtung des Schiebers 2. Die Zapfen 7 befinden sich gegenüber der Darstellung in Figur 2 am anderen Ende der Langlöcher 8. Damit bewegt sich auch der Steuerkeil 5 aus seiner Ruheposition in der Ausnehmung 6 in den Weg des Schwenkzapfens 9, so daß dieser durch die Weiterbewegung des Schiebers 2 gezwungen wird, durch eine Drehbewegung dem Steuerkeil 5 auszuweichen. Infolgedessen werden die Sperrorgane 10 wie in den Darstellungen b, c und d der Figuren 3 und 4 gezeigt, aus der Ausnehmung 20 nach oben herausbewegt und greifen in die Bandwickelkerne ein. Durch den Steuerkeil 5 wird die Welle 11 und damit die Sperrorgane 10 in dieser Position verriegelt.

Bei der Bewegung des Schiebers aus der Aufbewahrungsposition gemäß den Figuren 3 und 4 in die Entnahmeposition gemäß der Figur 2 bewirkt als erstes die Steuerkante 21 am Schieber 2, daß über die Steuerkante 4 an der Betätigungseinrichtung 3 diese wieder in ihre in Figur 2 dargestellte Position gelangt. Damit bewegt sich der Steuerkeil 5 aus dem Wirkungsbereich des Schwenkzapfens 9 in der Ausnehmung 6 und entriegelt die Sperrorgane 10. Bei der weiteren Bewegung des Schiebers 2 in die Entnahmeposition wird der zweite Schwenkzapfen 13, der sich bei aufgerichteten Sperrorganen 10 in dem tieferen Bereich der Ausnehmung 12 befindet, gegen die Kante 22 der Ausnehmung 12, die den tieferen Bereich von dem flacheren trennt, bewegt und durch diese zu einer Drehung veranlaßt, die die Sperrorgane 10 wieder in ihre, in Figur 2 dargestellte, Ruheposition bringt. Der tiefere Bereich der Ausnehmung 12 ist eine Öffnung in der Bodenplatte, was Material und Bauhöhe spart.

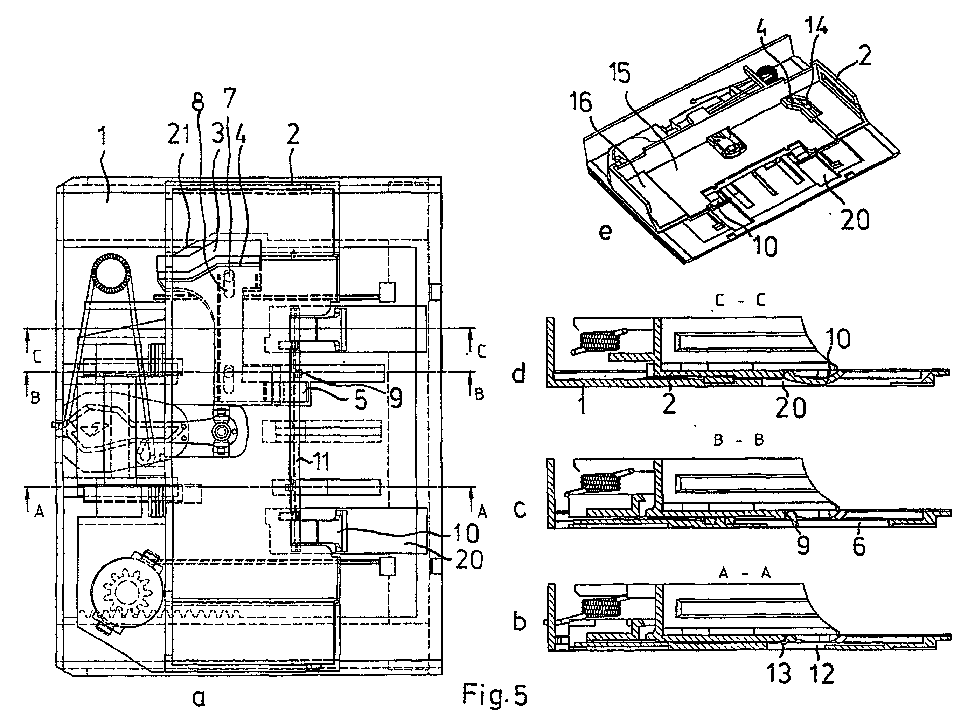

Figur 5 zeigt den Schieber in der Aufbewahrungsposition für den Fall, daß eine Digitalkassette sich auf dem Schieber befindet. In diesem Fall erfolgt keine Berührung und damit auch keine Bewegung der Betätigungseinrichtung 3, so daß der sich in der Ausnehmung 6 bewegende Schwenkzapfen 9 zu keiner Drehbewegung veranlaßt wird. Infolgedessen verbleiben die Sperrorgane 10 in ihrer Ruhestellung.

## Patentansprüche

1. Kassettenhalterung zur Queraufbewahrung von Magnetbandkassetten oder ähnlichen Tonträgern mit
einer Bodenplatte auf der ein in eine Entnahmeposition ausfahrbarer Schieber gelagert ist,
in die beiden Bandwickelkerne einer in der Aufbewahrungsposition auf dem Schieber gelagerten Kompaktkassette eingreifenden Sperrorganen, und
in einer Vertiefung im Schieber angeordnete Steuerelemente einer Betätigungseinrichtung, die durch eine Erhebung an der eingelegten Kompaktkassette bewegbar ist, **dadurch gekennzeichnet, daß**
die Sperrorgane (10) an einer am Schieber (2) quer zur Bewegungsrichtung des Schiebers gelagerten Welle (11) angeordnet sind, die mindestens einen von der Welle (11) abstehenden ersten Schwenkzapfen (9) aufweist,
Steuerkanten (4) an der auf der Bodenplatte (1) quer zur Bewegungsrichtung des Schiebers (2) beweglichen Betätigungseinrichtung (3) durch eine Ausnehmung (14) in dem Schieber (2) hindurchgreifend in einer Vertiefung (15) angeordnet sind und beim Einschieben der Kompaktkassette (19) mit dieser in Kontakt gelangen und
einen Steuerkeil (5), der bei der Querbewegung der Betätigungseinrichtung (3) durch die Kompaktkassette (19) in Kontakt mit dem ersten Schwenkzapfen (9) gelangt und dadurch die Sperrorgane (10) in die Bandwickelkerne (17) verschwenkt und verriegelt.

2. Kassettenhalterung nach Anspruch 1, **dadurch gekennzeichnet, daß** der erste Schwenkzapfen (9) und der Steuerkeil (5) in eine in der Bodenplatte (1) verlaufenden Ausnehmung (6) angeordnet sind.

3. Kassettenhalterung nach Anspruch 1 oder 2, **dadurch gekennzeichnet, daß** die Ausnehmung (14) im Schieber (2) eine Steuerkante (21) aufweist, die bei der Bewegung des Schiebers aus der Aufbewahrungsposition in die Entnahmeposition die Betätigungseinrichtung (3) wieder in die Ausgangsposition zurückbewegt und dadurch die Sperrorgane (10) entriegelt.

4. Kassettenhalterung nach Anspruch 3, **dadurch gekennzeichnet, daß** die Welle (11) mindestens einen zweiten von der Welle abstehenden Schwenkzapfen (13) zur Rückstellung der Sperrorgane (10) aufweist.

5. Kassettenhalterung nach Anspruch 4, **dadurch gekennzeichnet, daß** der zweite Schwenkzapfen (13) in der Aufbewahrungsposition in eine in der Bodenplatte (1) angeordnete Ausnehmung (12) ragt.

6. Kassettenhalterung nach Anspruch 5, **dadurch gekennzeichnet, daß** der zweite Schwenkzapfen (13) bei der Bewegung des Schiebers (2) aus der Aufbewahrungsposition in die Entnahmeposition durch eine Kante (22) in der Ausnehmung (12) in seine Ruhestellung geschwenkt wird und dadurch die Sperrorgane (10) aus den Bandwickelkernen (17) bewegt.

7. Kassettenhalterung nach einem der vorangegangenen Ansprüche, **dadurch gekennzeichnet, daß** die Sperrorgane (10) bei der Bewegung des Schiebers (2) in jeweils eine Ausnehmung (20) in der Bodenplatte (1) verlaufen, solange sie sich in Ruhestellung befinden.

## Claims

1. Cassette holder for the transverse storage of magnetic tape cassettes or similar sound carriers, which cassette holder has
a base plate on which there is mounted a slider element that is extendable to a removal position,
locking members that engage the two tape reel hubs of a compact cassette that is mounted on the slider element in the storage position, and
control elements of an actuating device that are arranged in a depression in the slider element, which actuating device is movable by a raised portion on the inserted compact cassette, **characterised in that**
the locking members (10) are arranged on a shaft (11) that is mounted on the slider element (2) transverse to the direction of movement of the slider element, which shaft has at least a first pivoter pin (9) that protrudes from the shaft (11),
control edges (4) on the actuating device (3) that is movable on the base plate (1) transversely to the direction of movement of the slider element (2) are arranged in a depression (15), projecting through a recess (14) in the slider element (2), and, on insertion of the compact cassette (19), come into contact therewith, and
a control wedge (5) that, on transverse movement of the actuating device (3) by the compact cassette (19), comes into contact with the first pivoter pin (9) and as a result pivots arid locks the locking members (10) into the tape reel hubs (17).

2. Cassette holder according to claim 1, **characterised in that** the first pivoter pin (9) and the control wedge (5) are arranged in a recess (6) extending along the base plate (1).

3. Cassette holder according to claim 1 or claim 2, **characterised in that** the recess (14) in the slider element (2) has a control edge (21) which, on movement of the slider element from the storage position to the removal position, moves the actuating device (3) back to its starting position and as a result unlocks the locking members (10).

4. Cassette holder according to claim 3, **characterised in that** the shaft (11) has at least a second pivoter pin (13) that protrudes from the shaft for the return of the locking members (10).

5. Cassette holder according to claim 4, **characterised in that** the second pivoter pin (13) in the storage position protrudes into a recess (12) that is arranged in the base plate (1).

6. Cassette holder according to claim 5, **characterised in that,** on movement of the slider element (2) from the storage position to the removal position, the second pivoter pin (13) is pivoted to its rest position by an edge (22) in the recess (12) and as a result removes the locking members (10) from the tape reel hubs (17).

7. Cassette holder according to any one of the preceding claims, **characterised in that**, on movement of the slider element (2), the locking members (10) each move along a recess (20) in the base plate (1), as long as they are in the rest position.

## Revendications

1. Support de cassettes pour la conservation transversale de cassettes de bandes magnétiques ou de supports sonores similaires avec
une plaque de fond sur laquelle est logée une coulisse amovible en position d'enlèvement,
des organes d'arrêt s'enclenchant dans les deux axes d'enroulement de bande d'une cassette compacte logée sur la coulisse en position de conservation, et
des éléments de commande d'un dispositif d'actionnement, placés dans une cavité dans la coulisse, qui est déplaçable au moyen d'une élévation sur la cassette compacte insérée, **caractérisé en ce que**
les organes d'arrêt (10) sont placés sur un arbre (11) logé dans la coulisse (2) transversalement au sens de déplacement de la coulisse, et comportant au moins un premier tourillon de pivotement (9) en saillie par rapport à l'arbre (11),
des bords de commande (4) sont disposés en s'enclenchant de part en part dans une cavité (15) sur le dispositif d'actionnement (3) se déplaçant sur la plaque de fond (1) transversalement au sens de déplacement de la coulisse (2) à travers un creux (14) dans la coulisse (2) et viennent au contact avec cette cavité lors de l'insertion de la cassette compacte (19) et
une clavette de commande (5) qui, lors du déplacement transversal du dispositif d'actionnement 3 par la cassette compacte (19), arrive au contact avec le premier tourillon de pivotement (9) et fait ainsi pivoter les organes d'arrêt (10) et les verrouille dans les axes d'enroulement de bande (17).

2. Support de cassettes selon la revendication 1, **caractérisé en ce que** le premier tourillon de pivotement (9) et la clavette de commande (5) sont installés dans une cavité (6) s'étendant dans la plaque de fond (1).

3. Support de cassettes selon la revendication 1 ou 2, **caractérisé en ce que** le creux (14) dans la coulisse (2) comporte un bord de commande (21) qui, lorsque la coulisse se déplace de la position de conservation dans la position d'enlèvement, replace le dispositif d'actionnement (3) en position de départ et déverrouille ainsi les organes d'arrêt (10).

4. Support de cassettes selon la revendication 3, **caractérisé en ce que** l'arbre (11) comporte au moins un deuxième tourillon de pivotement (13) en saillie par rapport à l'arbre pour replacer les organes d'arrêt (10) en position initiale.

5. Support de cassettes selon la revendication 4, **caractérisé en ce que** le deuxième tourillon de pivotement (13) fait saille, en position de conservation, dans une cavité (12) ménagée dans la plaque de fond (1).

6. Support de cassettes selon la revendication 5, **caractérisé en ce que** le deuxième tourillon de pivotement (13), lors du déplacement de la coulisse (2) de la position de conservation dans la position d'enlèvement, pivote en position de repos par l'intermédiaire d'un bord (22) dans la cavité (12) et déplace ainsi les organes d'arrêt (10) hors des axes d'enroulement de bande (17).

7. Support de cassettes selon l'un des revendications précédentes, **caractérisé en ce que**, lors du déplacement de la coulisse (2), les organes d'arrêt (10) s'étendent respectivement dans une cavité (20) dans la plaque de fond (1) tant qu'ils se trouvent en position de repos.
